# FASCICULE DE BREVET EUROPEEN

(11) **EP 4 372 722 B1**
(45) Date de publication et mention de la délivrance du brevet: **15.07.2026**
(21) Numéro de dépôt: 23208905.2
(22) Date de dépôt: 09.11.2023
(51) Int. Cl.: G08G 5/21, G08G 5/54, G08G 5/55

(54) **PROCÉDÉ ET CALCULATEUR AVIONIQUE DE DÉTERMINATION D'UN POINT D' ANCRAGE D'UN SEGMENT TERMINAL À PARTIR D'UN POINT D' APPROCHE INTERROMPUE, POUR UNE APPROCHE DE NON PRÉCISION**
VERFAHREN UND AVIONIKRECHNER ZUR BESTIMMUNG EINES ANKERPUNKTES EINES TERMINALSEGMENTS AUS EINEM UNTERBROCHENEN ANFALLSPUNKT FÜR EINEN NICHTPRÄZISIONSANFLUG
METHOD AND AVIONICS CALCULATOR FOR DETERMINING AN ANCHORING POINT OF A TERMINAL SEGMENT FROM AN INTERRUPTED APPROACH POINT, FOR A NON-PRECISION APPROACH

(30) Priorité: 17.11.2022 FR 2211936
(43) Date de publication de la demande: 22.05.2024
(73) Titulaire: Airbus Operations SAS, 31060 Toulouse (FR)
(72) Inventeur: ESSOUSSI, Mohamed-Habib, 31060 TOULOUSE (FR)
(74) Mandataire: Gevers & Orès

(56) Documents cités:
- CN-A- 104 794 213
- CN-A- 112 880 679
- CN-A- 112 883 541
- US-A1- 2004 183 698

## Description

### Domaine technique

La présente invention concerne un procédé et un calculateur avionique destinés à déterminer un point d'ancrage d'un segment terminal d'une trajectoire virtuelle pour un mode d'approche de non précision de type FLS d'un aéronef, en vue d'un atterrissage de l'aéronef sur une piste d'un aérodrome, ainsi qu'une méthode et un ensemble de systèmes de mise en œuvre d'un tel mode d'approche de non précision, comprenant respectivement un tel procédé et un tel dispositif.

### Etat de la technique

Dans le cadre de la présente invention, on entend par "approche de non précision" (en anglais "non precision approach") une approche qui n'est pas une approche de précision aux instruments, telle que par exemple une approche de type ILS ("Instrument Landing System") qui utilise notamment des stations sol situées en bordure de piste et un récepteur radio spécialisé monté à bord de l'aéronef.

Une approche de non précision, telle que considérée dans la présente invention, existe lorsque les équipements précédents ne sont pas disponibles ou en fonctionnement, tout au moins en partie, de sorte qu'une approche de précision usuelle ne peut pas être mise en œuvre. La présente invention s'applique plus particulièrement à une approche de non précision de type FLS (pour « FMS Landing System » en anglais avec FMS pour « Flight Management System » en anglais, c'est-à-dire un système d'atterrissage utilisant un système de gestion de vol).

Pour mettre en œuvre cette approche de non précision de type FLS, il est nécessaire de déterminer une trajectoire virtuelle correspondant au trajet théorique que doit suivre l'aéronef pendant cette approche. Le guidage de l'aéronef consiste alors à essayer d'annuler les éventuels écarts entre la position effective de l'aéronef et la position qu'il aurait s'il était sur cette trajectoire virtuelle. De façon usuelle, la trajectoire virtuelle comprend un segment terminal, à savoir le dernier segment avant d'atteindre la piste d'atterrissage. Ce segment terminal est défini par rapport à un point extrême aval dit point d'ancrage.

Ce point d'ancrage est, de façon usuelle, déterminé et positionné au niveau du seuil de la piste, qui est, en général, codé dans une base de données de navigation.

Or, dans certaines situations, en fonction notamment de l'orientation de la trajectoire virtuelle par rapport à l'axe de la piste, par exemple lorsque la trajectoire virtuelle croise l'axe de la piste en aval du seuil de la piste, ou bien lorsqu'un point d'approche interrompue est situé au-delà du seuil de la piste, il n'est pas possible de déterminer le point d'ancrage et il n'est donc pas possible de mettre en œuvre un mode d'approche de non précision de type FLS.

En outre, le seuil de la piste peut parfois être décalé temporairement, notamment lorsque des travaux sont réalisés sur la piste. Il peut alors arriver que la position du nouveau seuil de piste ne soit pas mise à jour dans la base de données de navigation de sorte qu'un seuil de piste erroné est fourni dans une telle situation.

Ce système usuel de mise en œuvre d'un mode d'approche de non précision de type FLS peut donc encore être amélioré, notamment en termes de disponibilité et de robustesse.

Par ailleurs, on connaît :
- par le document CN 112 880 679 A, un procédé de génération d'un faisceau virtuel FLS, basé notamment sur des informations relatives aux positions de points FAF, MAP, LTP et FEP, à l'orientation de la piste, à la hauteur TCH et à l'angle FPA ; et
- par le document US2004/183698 A1, un procédé et un dispositif pour déterminer un axe d'approche finale d'un aéronef pour une approche de non précision, en vue d'un atterrissage de l'aéronef sur une piste d'atterrissage.

### Exposé de l'invention

Un objectif de la présente invention est d'améliorer la mise en œuvre d'un mode d'approche de non précision de type FLS d'un aéronef. Pour ce faire, elle concerne un procédé de détermination d'un point d'ancrage d'un segment terminal d'une trajectoire virtuelle pour un mode d'approche de non précision de type FLS (ou mode FLS) d'un aéronef, en vue d'un atterrissage de l'aéronef sur une piste d'un aérodrome, ledit segment terminal commençant à un point d'approche finale et se terminant audit point d'ancrage, ledit procédé étant mis en œuvre dans un calculateur avionique, en particulier un système (ou calculateur) de gestion de vol de type (FMS pour « Flight Management System » en anglais), comprenant au moins une unité de traitement et une base de données de navigation.

Selon l'invention, ledit procédé comporte au moins les étapes suivantes :
- une étape de comparaison, mise en œuvre par l'unité de traitement du calculateur avionique, consistant à comparer une première altitude à une altitude dite de seuil, la première altitude correspondant à l'altitude d'un point d'approche interrompue relatif à la piste et contenu dans la base de données de navigation du calculateur avionique, l'altitude de seuil étant égale à la somme d'une seconde altitude correspondant à l'altitude de la piste et d'une hauteur de seuil de piste ; et
- une étape de calcul, également mise en œuvre par l'unité de traitement du calculateur avionique, consistant à déterminer, en fonction de cette comparaison, un point terminal dont l'altitude est égale à ladite altitude de seuil, et dont le segment de droite que forme ce point terminal avec la position du point d'approche interrompue présente une pente égale à celle du segment de droite défini par le point d'approche interrompue et le point d'approche finale, le point terminal (ainsi déterminé) étant susceptible d'être utilisé comme point d'ancrage, procédé selon lequel, si l'étape de comparaison conclut que la première altitude est inférieure à ladite altitude de seuil, ledit point terminal est utilisé comme point d'ancrage, en cas d'absence d'un point final prescrit dans la base de données de navigation.

Ainsi, pour déterminer le point d'ancrage, ledit procédé n'utilise pas le seuil de la piste, comme cela est le cas actuellement, mais le point d'approche interrompue MAP (pour « Missed Approach Point » en anglais), ou point MAP, qui correspond au point limite auquel le pilote doit remettre les gaz au plus tard lorsque l'approche correspondante est manquée. Or, ce point MAP qui est intégré dans la base de données de navigation liée à l'aérodrome est un paramètre qui est régulièrement mis à jour. De plus, le point d'ancrage est déterminé par rapport à une hauteur relative à la piste et non plus par rapport à une position de seuil de piste (qui pourrait être modifiée en cas de travaux temporaires notamment). Le procédé est ainsi avantageux en terme de robustesse (et de sécurité).

De plus, comme précisé ci-dessous, la détermination du point d'ancrage, telle que mise en œuvre par ledit procédé, n'est pas limitée par l'orientation du segment terminal de la trajectoire virtuelle par rapport à l'axe de la piste, ce qui permet de déterminer un point d'ancrage dans des situations où cela n'est pas possible actuellement, et donc d'augmenter la disponibilité du mode FLS.

Avantageusement, si l'étape de comparaison conclut que la première altitude est supérieure ou égale à ladite altitude de seuil (égale à la somme de l'altitude de la piste et de la hauteur de seuil de piste), l'étape de calcul utilise ledit point terminal comme point d'ancrage.

De plus, de façon avantageuse, si l'étape de comparaison conclut que la première altitude est inférieure à ladite altitude de seuil, l'étape de calcul utilise comme point d'ancrage :
- en cas de présence d'un point final prescrit FEP (pour « Final End Point » en anglais) dans la base de données de navigation, ce point final prescrit FEP.

La mise en œuvre du procédé n'est pas limitée par l'orientation de la projection sur le sol du segment terminal de la trajectoire virtuelle par rapport à l'axe de la piste, et peut ainsi s'appliquer aux situations suivantes :
- la projection sur le sol du segment terminal (de la trajectoire virtuelle) est alignée avec l'axe de la piste ou est parallèle à cet axe ;
- la projection sur le sol du segment terminal (de la trajectoire virtuelle) présente avec l'axe de la piste un angle α non nul et inférieur ou égal à 90°.

La présente invention concerne également une méthode de mise en œuvre d'un mode d'approche de non précision de type FLS d'un aéronef, en vue d'un atterrissage de l'aéronef sur une piste d'un aérodrome, ladite méthode utilisant une trajectoire virtuelle comprenant un segment terminal qui est défini par rapport à un point d'ancrage, ladite méthode étant mise en œuvre par un ensemble de systèmes avioniques.

Selon l'invention, ladite méthode comporte au moins un procédé de détermination d'un point d'ancrage tel que décrit ci-dessus et ladite méthode utilise le point d'ancrage déterminé par ledit procédé comme point d'ancrage du segment terminal de la trajectoire virtuelle.

La présente invention concerne, en outre, un calculateur avionique, en particulier un système (ou calculateur) de gestion de vol, pour déterminer un point d'ancrage d'un segment terminal d'une trajectoire virtuelle pour un mode FLS, ledit segment terminal commençant à un point d'approche finale se terminant audit point d'ancrage, ledit calculateur avionique comprenant au moins une unité de traitement et une base de données de navigation.

Selon l'invention, l'unité de traitement est configurée :
- pour comparer une première altitude à une altitude dite de seuil, la première altitude correspondant à l'altitude d'un point d'approche interrompue relatif à la piste et contenu dans la base de données de navigation du calculateur avionique, l'altitude de seuil étant égale à la somme d'une seconde altitude correspondant à l'altitude de la piste et d'une hauteur de seuil de piste ; et
- pour déterminer, en fonction de cette comparaison, un point terminal dont l'altitude est égale à ladite altitude de seuil, et dont le segment de droite que forme ce point terminal avec la position du point d'approche interrompue présente une pente égale à celle du segment de droite défini par le point d'approche interrompue et le point d'approche finale, ledit point terminal (ainsi déterminé) étant susceptible d'être utilisé comme point d'ancrage, ledit point terminal étant utilisé comme point d'ancrage, en cas d'absence d'un point final prescrit dans la base de données de navigation, si la première altitude est inférieure à ladite altitude de seuil.

La présente invention concerne également un ensemble de systèmes avioniques pour mettre en œuvre un mode FLS, ledit ensemble comprenant au moins un système de gestion de vol configuré pour utiliser une trajectoire finale virtuelle dont un segment terminal est défini par rapport à un point d'ancrage.

Selon l'invention, ledit ensemble (de systèmes) comporte au moins un calculateur avionique de détermination d'un point d'ancrage tel que décrit ci-dessus, et ledit ensemble (de systèmes) est configuré pour pouvoir utiliser le point d'ancrage déterminé par ledit calculateur avionique comme point d'ancrage du segment terminal de la trajectoire virtuelle.

Par ailleurs, la présente invention concerne également un aéronef, en particulier un avion de transport, qui comporte au moins un calculateur avionique et/ou au moins un ensemble de systèmes, tels que ceux décrits ci-dessus.

### Brève description des figures

Les figures annexées feront bien comprendre comment l'invention peut être réalisée. Sur ces figures, des références identiques désignent des éléments semblables.
La figure 1 est le schéma synoptique d'un mode de réalisation particulier d'un ensemble de systèmes de mise en œuvre d'un mode FLS comprenant un calculateur avionique de détermination d'un point d'ancrage d'un segment terminal d'une trajectoire virtuelle.
La figure 2 est le schéma synoptique d'un mode de réalisation particulier d'une méthode de mise en œuvre d'un mode FLS comprenant un procédé de détermination d'un point d'ancrage d'un segment terminal d'une trajectoire virtuelle.
La figure 3 est une vue schématique dans un plan vertical d'un segment terminal d'une trajectoire virtuelle suivie par un aéronef lors d'une approche, permettant de mettre en évidence la détermination d'un point d'ancrage pour un point d'approche interrompue situé en amont de la piste.
La figure 4 est une vue schématique dans un plan horizontal de la situation de la figure 3 dans le cas particulier d'un angle non nul entre le segment terminal et l'axe de la piste.
La figure 5 est une vue schématique dans un plan vertical d'un segment terminal d'une trajectoire virtuelle suivie par un aéronef lors d'une approche, permettant de mettre en évidence la détermination d'un point d'ancrage pour un point d'approche interrompue situé en aval de la piste.

### Description détaillée

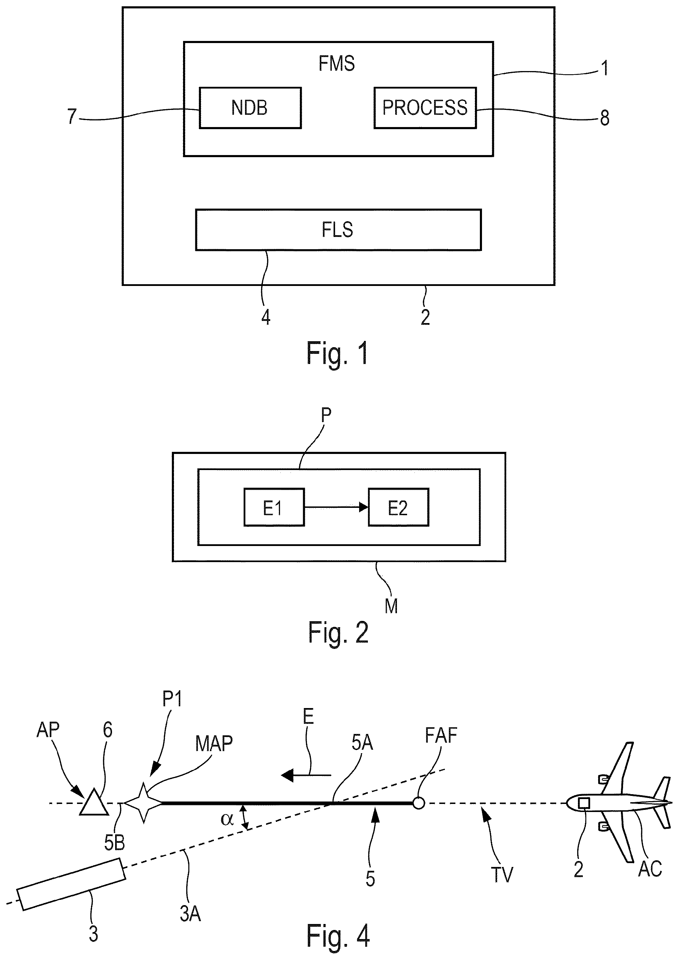

Le calculateur avionique 1, représenté schématiquement sur la figure 1 et permettant d'illustrer l'invention, est destiné à déterminer un point d'ancrage d'un segment terminal d'une trajectoire virtuelle, comme précisé ci-dessous.

Dans un mode de réalisation préféré, ce calculateur avionique 1 correspond à un système (ou calculateur) de gestion de vol de type FMS (« Flight Management System » en anglais) d'un aéronef AC, par exemple d'un avion de transport.

De plus, dans une application préférée, ce calculateur avionique 1 fait partie d'un ensemble 2 de systèmes, destiné à la mise en œuvre d'un mode d'approche de non précision de type FLS (dit « mode FLS » ci-après) de l'aéronef AC.

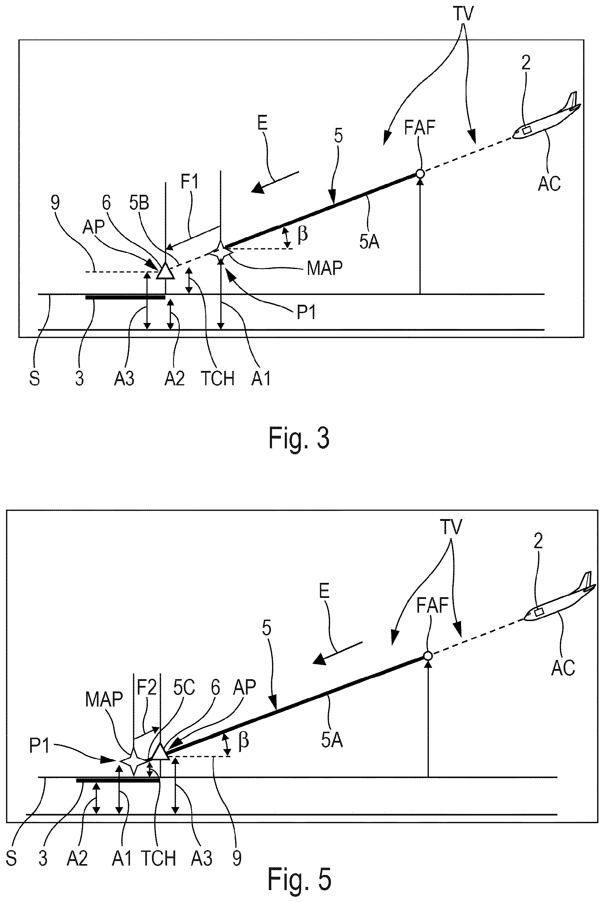

Dans les exemples des figures 3 à 5, l'aéronef AC équipé dudit ensemble 2 est en phase d'approche d'une piste 3 (d'atterrissage) d'un aérodrome, en vue d'un atterrissage sur cette piste 3.

L'ensemble 2 permet, de façon usuelle, de déterminer une trajectoire (finale) virtuelle TV et de la faire suivre par l'aéronef AC pour la mise en œuvre d'un mode FLS, en vue de l'atterrissage de l'aéronef AC sur la piste 3. Plus précisément, l'ensemble 2 détermine les déviations latérale et verticale de la position courante de l'aéronef AC par rapport à cette trajectoire virtuelle TV (ou axe d'approche virtuel), et l'aéronef AC est alors piloté de manière à annuler ces déviations.

Pour ce faire, l'ensemble 2 comprend, en plus du calculateur avionique 1, un groupe 4 de systèmes usuels. Le groupe 4 comporte, généralement, de façon usuelle, au moins certains des systèmes suivants :
- un système de traitement d'informations, par exemple un récepteur multimode d'aide à l'atterrissage, de type MMR ("Multi Mode Receiver" en anglais) ;
- un système de guidage de vol, par exemple de type FG (pour « Flight Guidance » en anglais) ;
- un système d'alerte de vol, par exemple de type FWS (pour « Flight Warning System » en anglais) ;
- un système d'alerte et d'évitement de terrain, par exemple de type TAWS (pour « Terrain Avoidance and Warning System » en anglais).

Les systèmes usuels du groupe 4 ne sont pas décrits davantage dans la présente description.

L'ensemble 2 (qui est embarqué sur l'aéronef AC, comme représenté très schématiquement sur les figures 3 à 5) est donc destiné à aider le pilote de l'aéronef AC, notamment pour mettre en œuvre le mode FLS le long de la trajectoire virtuelle TV.

Cette trajectoire virtuelle TV comprend un segment terminal 5 (ou segment d'approche finale). Ce segment terminal 5 correspond à un segment de droite qui, dans le sens (illustré par une flèche E) du vol de l'aéronef AC lors de l'approche, débute à un point FAF (pour « Final approach Fix » en anglais), c'est-à-dire un point amont représentant un point ou repère d'approche finale, et il présente une pente β, généralement de l'ordre de 3°. Dans la description suivante, les termes « amont » et « aval » sont définis par rapport au sens du vol de l'aéronef AC indiqué par la flèche E sur les figures 3 à 5.

Le segment terminal 5 se termine à un point aval représentant un point d'ancrage AP (ou « anchor point » en anglais).

Le calculateur avionique 1 a pour objet de déterminer le point d'ancrage AP du segment terminal 5 et de le fournir à l'ensemble 2 pour qu'il l'utilise pour mettre en œuvre le mode FLS.

Pour ce faire, le calculateur avionique 1 comporte au moins, comme représenté sur la figure 1 :
- une base de données de navigation 7 de type NDB (pour « Navigation Data Base » en anglais) ; et
- une unité de traitement 8 (PROCESS pour « Processing Unit » en anglais) configurée pour recevoir, notamment de la base de données de navigation 7, des données et pour réaliser des traitements à partir de ces données.

Plus précisément, l'unité de traitement 8 est configurée :
- pour comparer une première altitude A1 à une altitude dite de seuil A3, cette première altitude correspondant à l'altitude A1 d'un point d'approche interrompue MAP (ou point MAP) qui est relatif à la piste 3 (figures 3 et 5) et qui est contenu dans la base de données de navigation 7 du calculateur avionique 8, l'altitude de seuil A3 étant, quant à elle, égale à la somme d'une seconde altitude A2 correspondant à l'altitude de la piste 3 et d'une hauteur TCH de seuil de piste ; et
- pour déterminer, en fonction du résultat de cette comparaison, un point terminal 6 susceptible d'être utilisé comme point d'ancrage AP.

Comme précisé ci-dessous, l'unité de traitement 8est configurée pour calculer le point terminal 6 (figures 3 à 5) de sorte qu'il corresponde à un point dont l'altitude est égale à ladite altitude de seuil A3, et dont le segment de droite 5B, 5C que forme ce point terminal 6 avec la position P1 du point d'approche interrompue MAP présente une pente β qui est égale à la pente du segment de droite 5A défini par le point d'approche interrompue MAP et le point FAF.

La hauteur TCH de seuil de piste (pour « Threshold Crossing Height » en anglais) est, soit codée dans la base de données de navigation 7, soit enregistrée dans une mémoire du calculateur avionique 1, en étant en général égale à 50 pieds (environ 15 mètres) dans ce cas.

Le calculateur avionique 1 n'utilise donc pas le seuil de la piste, comme cela est le cas actuellement, mais le point MAP qui est intégré dans la base de données de navigation 7 liée à l'aérodrome et qui est un paramètre qui est régulièrement mis à jour, et détermine le point d'ancrage par rapport à une hauteur TCH relative à la piste 3 et non plus par rapport à une position du seuil de la piste (qui pourrait être modifiée en cas de travaux temporaires notamment), ce qui est avantageux en termes de robustesse (et de sécurité).

Le calculateur avionique 1, tel que décrit ci-dessus, est destiné à mettre en œuvre un procédé P (représenté sur la figure 2) de détermination d'un point d'ancrage AP d'un segment terminal 5 d'une trajectoire virtuelle TV pour un mode FLS d'un aéronef AC, en vue d'un atterrissage de l'aéronef AC sur une piste 3 d'un aérodrome, comme illustré sur les figures 3 à 5, le segment terminal 5 débutant au point d'approche finale FAF et se terminant au point d'ancrage AP.

Ce procédé P fait partie d'une méthode M (figure 2) de mise en œuvre par l'ensemble 2 d'un mode FLS, qui utilise le point d'ancrage AP déterminé par ledit procédé P comme point d'ancrage du segment terminal 5 de la trajectoire virtuelle TV lors de la mise en œuvre du mode FLS.

Ledit procédé P comporte, comme représenté sur la figure 2, notamment une étape de comparaison E1 et une étape de calcul E2, précisées ci-dessous.

Le procédé P prend en compte la position P1 (à savoir la latitude, la longitude, et l'altitude A1) du point d'approche interrompue MAP (pour « Missed Approach Point » en anglais), ou point MAP, relatif à la piste 3. Le point MAP qui est publié, correspond au point limite auquel le pilote doit remettre les gaz au plus tard lorsque l'approche correspondante est manquée (ce qui est notamment le cas lorsque le pilote ne voit pas la piste 3 avant d'arriver à ce point MAP).

Le procédé P prend également en compte l'altitude A2 correspondant à l'altitude de la piste 3, c'est-à-dire l'altitude du sol S au niveau de la piste 3, ainsi que la hauteur TCH.

L'étape de comparaison E1, mise en œuvre par l'unité de traitement 8 consiste :
- à calculer l'altitude de seuil A3 en faisant la somme de l'altitude A2 (de la piste 3) et de la hauteur TCH de seuil de piste ; et
- à comparer l'altitude A1 à cette altitude de seuil A3 (ainsi calculée).

La détermination du point d'ancrage AP dépend du résultat de cette comparaison comme précisé ci-dessous.

Par ailleurs, l'étape de calcul E2, également mise en œuvre par l'unité de traitement 8 après l'étape de comparaison E1, consiste à déterminer, en fonction de cette comparaison, le point d'ancrage AP et notamment le point terminal 6.

Plus précisément, l'étape de calcul E2, consiste à déterminer le point terminal 6 comme le point dont l'altitude est égale à l'altitude de seuil A3, et dont le segment de droite 5B que forme ce point terminal 6 avec la position P1 du point MAP présente une pente β égale à celle du segment de droite 5A défini par le point MAP et le point FAF.

Toutefois, comme indiqué ci-dessus, la détermination (à l'étape de calcul E2) du point d'ancrage AP dépend du résultat de la comparaison mise en œuvre à l'étape de comparaison E1.

Premièrement, si l'étape de comparaison E1 conclut que l'altitude A1 est supérieure ou égale à l'altitude de seuil A3, c'est-à-dire à la somme de l'altitude A2 et de la hauteur TCH du seuil de piste, l'étape de calcul E2 détermine ledit point terminal 6 et l'utilise (et le fournit) comme point d'ancrage AP.

Dans une telle situation, comme représenté sur la figure 3, l'unité de calcul 10 détermine comme point terminal 6 (et donc comme point d'ancrage AP) le point d'intersection entre :
- d'une part, un prolongement 5B vers l'amont (comme illustré par une flèche F1) de la partie 5A (de segment terminal) déterminée entre les points FAF et MAP, à partir du point MAP, selon une pente de valeur égale à l'angle (de pente) β de la partie 5A ; et
- d'autre part, un plan horizontal 9 d'altitude de seuil A3.

Dans cette situation, le segment terminal 5 qui sera utilisé pour la mise en œuvre du mode FLS et qui est défini entre le point FAF et le point terminal 6 (représentant le point d'ancrage AP) correspond à la partie 5A (de segment de droite) à laquelle on a ajouté le prolongement 5B (représentant également un segment de droite).

Cette situation s'applique aux cas suivants :
- à un premier cas (non représenté) où la projection sur le sol du segment terminal 5 est alignée avec l'axe 3A de la piste 3 ou est parallèle à cet axe 3A de la piste 3 ; et
- à un second cas où la projection sur le sol du segment terminal 5 présente avec l'axe 3A de la piste 3 un angle α non nul (et inférieur ou égal à 90°), comme représenté sur la figure 4. Ce second cas concerne donc également des situations où l'angle α est élevé et par exemple supérieur à 50°.

La détermination du point d'ancrage AP, mise en œuvre par le procédé P, n'est donc pas limitée par l'orientation du segment terminal 5 de la trajectoire virtuelle TV par rapport à l'axe 3A de la piste 3, ce qui permet de déterminer un point d'ancrage AP dans des situations où cela n'est pas possible actuellement, et donc d'augmenter la disponibilité du mode FLS.

Deuxièmement, si l'étape de comparaison E1 conclut que l'altitude A1 est inférieure à l'altitude de seuil A3, c'est-à-dire à la somme de l'altitude A2 de la piste 3 et de la hauteur TCH du seuil de piste, l'étape de calcul E2 détermine le point d'ancrage AP, en fonction de la présence ou non d'un point final prescrit FEP (pour « Final End Point » en anglais) dans la base de données de navigation 7.

Plus précisément, l'étape de calcul E2 détermine comme point d'ancrage AP :
- en cas de présence d'un point FEP (pour « Final End Point » en anglais) dans la base de données de navigation 7, ce point FEP (non représenté) ; et
- en cas d'absence d'un point FEP dans la base de données de navigation 7, le point terminal 6 déterminé par l'unité de traitement 8.

Dans cette dernière situation, comme représenté sur la figure , l'unité de traitement 8 détermine comme point terminal 6 (et donc comme point d'ancrage AP) le point d'intersection entre :
- d'une part, un retrait 5C vers l'aval (comme illustré par une flèche F2), par rapport à la partie 5A (de segment terminal) déterminée entre les points FAF et MAP, à partir du point MAP, selon une pente de valeur égale à l'angle (de pente) β de la partie 5A ; et
- d'autre part, un plan horizontal 9 d'altitude de seuil A3.

Dans cette dernière situation, le segment terminal 5 qui sera utilisé pour la mise en œuvre du mode FLS (en l'absence de point FEP) et qui est défini entre le point FAF et le point terminal 6 (représentant le point d'ancrage AP) correspond à la partie 5A (de segment de droite) à laquelle on a retranché le retrait 5C (représentant également un segment de droite).

Le calculateur avionique 1 et le procédé P (ainsi que l'ensemble 2 et la méthode M qui utilisent le point d'ancrage AP déterminé par le calculateur avionique 1 et le procédé P), tels que décrits ci-dessus, présentent de nombreux avantages. En particulier, ils présentent des avantages :
- en termes de robustesse et de sécurité, puisqu'ils ne sont pas impactés par un changement temporaire du seuil de la piste, notamment en cas de travaux ;
- en terme de disponibilité, puisqu'ils permettent de déterminer un point d'ancrage (et ainsi de mettre en œuvre le mode FLS) pour des orientations du segment terminal de la trajectoire virtuelle par rapport à l'axe de la piste qui ne le permettent pas actuellement, et en particulier lorsque l'intersection entre la projection sur le sol du segment terminal de la trajectoire virtuelle et l'axe de la piste est situé au-delà de la piste et lorsque l'angle entre cette projection et l'axe de la piste excède 50° ;
- en fournissant des informations susceptibles d'être utilisées, le cas échéant, dans un futur système d'atterrissage automatique pour des approches en ligne droite et non décalées.

Plus particulièrement, par rapport au fonctionnement usuel, utilisant comme point d'ancrage le seuil de la piste (ou un point FEP), le point d'ancrage AP (déterminé par le calculateur avionique 1) ne change pas dans les cas suivants :
- le point MAP est situé sur le seuil de la piste ;
- le point MAP est situé au-delà du seuil de la piste et un point FEP est codé dans la base de donnée de navigation 7, ce point FEP correspondant dans ce cas au point d'ancrage AP.

En revanche, par rapport au fonctionnement usuel, le point d'ancrage AP (déterminé par le calculateur avionique 1) est modifié lorsque le point MAP est situé en amont du seuil de la piste, et ceci quelle que l'orientation du segment terminal par rapport à l'axe de la piste, aussi bien pour un segment terminal aligné avec l'axe de la piste ou parallèle à cet axe que pour un segment terminal présentant avec l'axe de la piste un angle α non nul et inférieur ou égal à 90°. Ceci permet d'augmenter la robustesse du mode FLS (notamment dans la cas d'un déplacement temporaire du seuil de la piste).

En outre, un point d'ancrage AP (permettant de mettre en œuvre le mode FLS) est déterminé par le calculateur avionique 1, dans le cas suivant pour lequel une telle détermination n'était pas possible avec le fonctionnement usuel : le point MAP est situé au-delà (en aval) du seuil de la piste et aucun point FEP n'est codé dans la base de donnée de navigation 7, ce qui permet d'augmenter la disponibilité du mode FLS (et la robustesse en cas de déplacement temporaire du seuil de la piste).

## Revendications

1. Procédé de détermination d'un point d'ancrage d'un segment terminal d'une trajectoire virtuelle pour un mode d'approche de non précision de type FLS d'un aéronef, en vue d'un atterrissage de l'aéronef (AC) sur une piste (3) d'un aérodrome, ledit segment terminal (5) commençant à un point d'approche finale (FAF) et se terminant audit point d'ancrage (AP), ledit procédé (P) étant mis en œuvre dans un calculateur avionique (1), en particulier un système de gestion de vol, comprenant au moins une unité de traitement (8) et une base de données de navigation (7), ledit procédé (P) comportant au moins les étapes suivantes :
- une étape de comparaison (E1), mise en œuvre par l'unité de traitement (8) du calculateur avionique (1), consistant à comparer une première altitude (A1) à une altitude dite de seuil (A3), la première altitude correspondant à l'altitude (A1) d'un point d'approche interrompue (MAP) relatif à la piste (3) et contenu dans la base de données de navigation (7) du calculateur avionique (1), l'altitude de seuil (A3) étant égale à la somme d'une seconde altitude (A2) correspondant à l'altitude de la piste (3) et d'une hauteur (TCH) de seuil de piste ; et
- une étape de calcul (E2), également mise en œuvre par l'unité de traitement (8) du calculateur avionique (1)), consistant à déterminer, en fonction de cette comparaison, un point terminal (6) dont l'altitude est égale à ladite altitude de seuil (A3), et dont le segment de droite (5B, 5C) que forme ce point terminal (6) avec la position (P1) du point d'approche interrompue (MAP) présente une pente (β) égale à celle du segment de droite (5A) défini par le point d'approche interrompue (MAP) et le point d'approche finale (FAF), ledit point terminal (6) étant susceptible d'être utilisé comme point d'ancrage (AP),
ledit procédé étant **caractérisé en ce que**, si l'étape de comparaison (E1) conclut que la première altitude (A1) est inférieure à ladite altitude de seuil (A3), ledit point terminal (6) est utilisé comme point d'ancrage (AP), en cas d'absence d'un point final prescrit (FEP) dans la base de données de navigation (7).

2. Procédé selon la revendication 1,
**caractérisé en ce que**, si l'étape de comparaison (E1) conclut que la première altitude (A1) est supérieure ou égale à ladite altitude de seuil (A3), l'étape de calcul (E2) utilise ledit point terminal (6) comme point d'ancrage (AP).

3. Procédé selon l'une des revendications 1 et 2,
**caractérisé en ce que**, si l'étape de comparaison (E1) conclut que la première altitude (A1) est inférieure à ladite altitude de seuil (A3), l'étape de calcul (E2) utilise comme point d'ancrage (AP), en cas de présence d'un point final prescrit (FEP) dans la base de données de navigation (7), ce point final prescrit (FEP).

4. Procédé selon l'une des revendications 1 à 3,
**caractérisé en ce que** la projection sur le sol (S) du segment terminal (5) est parallèle à ou aligné avec un axe (3A) de la piste (3).

5. Procédé selon l'une des revendications 1 à 3,
**caractérisé en ce que** la projection sur le sol (S) du segment terminal (5) présente avec un axe (3A) de la piste (3) un angle (α) non nul et inférieur ou égal à 90°.

6. Méthode de mise en œuvre d'un mode d'approche de non précision de type FLS d'un aéronef, en vue d'un atterrissage de l'aéronef (AC) sur une piste (3) d'un aérodrome, ladite méthode (M) utilisant une trajectoire virtuelle (TV) comprenant un segment terminal (5) qui est défini par rapport à un point d'ancrage (AP), ladite méthode étant mise en œuvre par un ensemble (2) de systèmes avioniques,
**caractérisée en ce qu'**elle comporte au moins un procédé (P) de détermination d'un point d'ancrage (AP) selon l'une quelconque des revendications 1 à 5 et **en ce qu'**elle utilise le point d'ancrage (AP) déterminé par ledit procédé (P) comme point d'ancrage du segment terminal (5) de la trajectoire virtuelle (TV).

7. Calculateur avionique, en particulier un système de gestion de vol, pour déterminer un point d'ancrage d'un segment terminal d'une trajectoire virtuelle pour un mode d'approche de non précision de type FLS d'un aéronef, en vue d'un atterrissage de l'aéronef (AC) sur une piste (3) d'un aérodrome, ledit segment terminal (5) commençant à un point d'approche finale (FAF) et se terminant audit point d'ancrage (AP), ledit calculateur avionique (1) comprenant au moins une unité de traitement (8) et une base de données de navigation (7),
l'unité de traitement (8) étant configurée :
- pour comparer une première altitude (A1) à une altitude dite de seuil (A3), la première altitude correspondant à l'altitude (A1) d'un point d'approche interrompue (MAP) relatif à la piste (3) et contenu dans la base de données de navigation (7) du calculateur avionique (1), l'altitude de seuil (A3) étant égale à la somme de ladite seconde altitude (A2) correspondant à l'altitude de la piste (3) et d'une hauteur (TCH) de seuil de piste ; et
- pour déterminer, en fonction de cette comparaison, un point terminal (6) dont l'altitude est égale à ladite altitude de seuil (A3), et dont le segment de droite (5B, 5C) que forme ce point terminal (6) avec la position (P1) du point d'approche interrompue (MAP) présente une pente (β) égale à celle du segment de droite (5A) défini par le point d'approche interrompue (MAP) et le point d'approche finale (FAF), ledit point terminal (6) étant susceptible d'être utilisé comme point d'ancrage (AP),
l'unité de traitement étant **caractérisée en ce que** ledit point terminal (6) est utilisé comme point d'ancrage (AP), en cas d'absence d'un point final prescrit (FEP) dans la base de données de navigation (7), si la première altitude (A1) est inférieure à ladite altitude de seuil (A3).

8. Ensemble de systèmes avioniques pour mettre en œuvre un mode d'approche de non précision de type FLS d'un aéronef, en vue d'un atterrissage de l'aéronef (AC) sur une piste (3) d'un aérodrome, ledit ensemble (2) comprenant au moins un système de gestion de vol configuré pour utiliser une trajectoire virtuelle (TV) comprenant un segment terminal (5) qui est défini par rapport à un point d'ancrage (AP),
**caractérisé en ce qu'**il comporte au moins un calculateur avionique (1) de détermination d'un point d'ancrage (AP) selon la revendication 7 et **en ce qu'**il est configuré pour utiliser le point d'ancrage (AP) déterminé par ledit calculateur avionique (1) comme point d'ancrage du segment terminal (5) de la trajectoire virtuelle (TV).

9. Aéronef,
**caractérisé en ce qu'**il comporte au moins un ensemble (2) de systèmes selon la revendication 8.

## Patentansprüche

1. Verfahren zur Bestimmung eines Ankerpunktes eines Terminalsegments einer virtuellen Flugbahn für einen Nichtpräzisionsanflugsmodus vom Typ FLS eines Flugzeugs zum Zwecke einer Landung des Flugzeugs (AC) auf einer Piste (3) eines Flugfeldes, wobei das Terminalsegment (5) an einem Endanflugspunkt (FAF) beginnt und am Ankerpunkt (AP) endet, wobei das Verfahren (P) in einem Avionikrechner (1) durchgeführt wird, insbesondere einem Flugverwaltungssystem, das mindestens eine Verarbeitungseinheit (8) und eine Navigationsdatenbank (7) umfasst, wobei das Verfahren (P) mindestens die folgenden Schritte umfasst:
einen Vergleichsschritt (E1), durchgeführt durch die Verarbeitungseinheit (8) des Avionikrechners (1), der darin besteht, eine erste Höhe (A1) mit einer als Schwellenhöhe bezeichneten Höhe (A3) zu vergleichen, wobei die erste Höhe der Höhe (A1) eines Punkts eines unterbrochenen Anflugs (MAP) in Bezug auf die Piste (3) entspricht und in der Navigationsdatenbank (7) des Avionikrechners (1) enthalten ist, wobei die Schwellenhöhe (A3) gleich der Summe aus einer zweiten Höhe (A2), die der Höhe der Piste (3) entspricht, und einer Schwellenhöhe (TCH) der Piste ist; und
- einen Berechnungsschritt (E2), ebenfalls von der Verarbeitungseinheit (8) des Avionikrechners (1) durchgeführt, der darin besteht, in Abhängigkeit von diesem Vergleich einen Terminalpunkt (6) zu bestimmen, dessen Höhe gleich der Schwellenhöhe (A3) ist und bei dem das Geradensegment (5B, 5C), das dieser Terminalpunkt (6) mit der Position (P1) des Punkts des unterbrochenen Anflugs (MAP) bildet, eine Neigung (B) aufweist, die gleich jener des Geradensegments (5A) ist, das durch den Punkt des unterbrochenen Anflugs (MAP) und den Endanflugspunkt (FAF) definiert ist,
wobei der Terminalpunkt (6) geeignet ist, als Ankerpunkt (AP) verwendet zu werden, wobei das Verfahren **dadurch gekennzeichnet ist, dass**, falls im Vergleichsschritt (E1) gefolgert wird, dass die erste Höhe (A1) kleiner als die Schwellenhöhe (A3) ist, im Falle des Fehlens eines vorgegebenen Endpunktes (FEP) in der Navigationsdatenbank (7) der Terminalpunkt (6) als Ankerpunkt (AP) verwendet wird.

2. Verfahren nach Anspruch 1,
**dadurch gekennzeichnet, dass**, falls im Vergleichsschritt (E1) gefolgert wird, dass die erste Höhe (A1) größer oder gleich der Schwellenhöhe (A3) ist, der Berechnungsschritt (E2) den Terminalpunkt (6) als Ankerpunkt (AP) verwendet.

3. Verfahren nach einem der Ansprüche 1 und 2,
**dadurch gekennzeichnet, dass**, falls im Vergleichsschritt (E1) gefolgert wird, dass die erste Höhe (A1) kleiner als die Schwellenhöhe (A3) ist, der Berechnungsschritt (E2) im Falle des Vorliegens eines vorgegebenen Endpunkts (FEP) in der Navigationsdatenbank (7) diesen vorgegebenen Endpunkt (FEP) als Ankerpunkt (AP) verwendet.

4. Verfahren nach einem der Ansprüche 1 bis 3,
**dadurch gekennzeichnet, dass** die Projektion des Terminalsegments (5) auf den Boden (S) parallel oder ausgerichtet mit einer Achse (3A) der Piste (3) ist.

5. Verfahren nach einem der Ansprüche 1 bis 3,
**dadurch gekennzeichnet, dass** die Projektion des Terminalsegments (5) auf den Boden (S) mit einer Achse (3A) der Piste (3) einen Winkel ungleich Null und kleiner oder gleich 90° aufweist.

6. Verfahren zum Durchführen eines Nichtpräzisionsanflugs vom Typ FLS eines Flugzeugs zum Zwecke einer Landung des Flugzeugs (AC) auf einer Piste (3) eines Flugfeldes, wobei das Verfahren (M) eine virtuelle Flugbahn (TV) verwendet, die ein Terminalsegment (5) umfasst, das in Bezug auf einen Ankerpunkt (AP) definiert ist, wobei das Verfahren von einer Anordnung (2) von Avioniksystemen durchgeführt wird,
**dadurch gekennzeichnet, dass** es mindestens ein Verfahren (P) zur Bestimmung eines Ankerpunktes (AP) nach einem der Ansprüche 1 bis 5 umfasst und dass es den durch das Verfahren (P) bestimmten Ankerpunkt (AP) als Ankerpunkt des Terminalsegments (5) der virtuellen Flugbahn (TV) verwendet.

7. Avionikrechner, insbesondere eines Flugverwaltungssystems, zum Bestimmen eines Ankerpunktes eines Terminalsegments einer virtuellen Flugbahn für einen Nichtpräzisionsanflugsmodus vom Typ FLS eines Flugzeugs zum Zwecke einer Landung des Flugzeugs (AC) auf einer Piste (3) eines Flugfeldes, wobei das Terminalsegment (5) an einem Endanflugspunkt (FAF) beginnt und am Ankerpunkt (AP) endet, wobei der Avionikrechner (1) mindestens eine Verarbeitungseinheit (8) und eine Navigationsdatenbank (7) umfasst, wobei die Verarbeitungseinheit (8) konfiguriert ist:
um eine erste Höhe (A1) mit einer als Schwellenhöhe bezeichneten Höhe (A3) zu vergleichen, wobei die erste Höhe der Höhe (A1) eines Punkts eines unterbrochenen Anflugs (MAP) in Bezug auf die Piste (3) entspricht und in der Navigationsdatenbank (7) des Avionikrechners (1) enthalten ist, wobei die Schwellenhöhe (A3) gleich der Summe aus der zweiten Höhe (A2), die der Höhe der Piste (3) entspricht, und einer Schwellenhöhe (TCH) der Piste ist; und
- um in Abhängigkeit von diesem Vergleich einen Terminalpunkt (6) zu bestimmen, dessen Höhe gleich der Schwellenhöhe (A3) ist und bei dem das Geradensegment (5B, 5C), das dieser Terminalpunkt (6) mit der Position (P1) des Punkts des unterbrochenen Anflugs (MAP) bildet, eine Neigung (B) aufweist, die gleich jener des Geradensegments (5A) ist, das durch den Punkt des unterbrochenen Anflugs (MAP) und den Endanflugspunkt (FAF) definiert ist, wobei der Terminalpunkt (6) geeignet ist, als Ankerpunkt (AP) verwendet zu werden,
wobei die Verarbeitungseinheit **dadurch gekennzeichnet ist, dass** im Falle des Fehlens eines vorgegebenen Endpunktes (FEP) in der Navigationsdatenbank (7) der Terminalpunkt (6) als Ankerpunkt (AP) verwendet wird, falls die erste Höhe (A1) kleiner als die Schwellenhöhe (A3) ist.

8. Anordnung von Avioniksystemen, um einen Nichtpräzisionsanflugsmodus vom Typ FLS eines Flugzeugs zum Zwecke einer Landung des Flugzeugs (AC) auf einer Piste (3) eines Flugfeldes durchzuführen, wobei die Anordnung (2) mindestens ein Flugverwaltungssystem umfasst, das konfiguriert ist, um eine virtuelle Flugbahn (TV) zu verwenden, die ein Terminalsegment (5) umfasst, das in Bezug auf einen Ankerpunkt (AP) definiert ist, **dadurch gekennzeichnet, dass** sie mindestens einen Avionikrechner (1) zur Bestimmung eines Ankerpunktes (AP) nach Anspruch 7 umfasst und dass sie konfiguriert ist, um den von dem Avionikrechner (1) bestimmten Ankerpunkt (AP) als Ankerpunkt des Terminalsegments (5) der virtuellen Flugbahn (TV) zu verwenden.

9. Luftfahrzeug,
**dadurch gekennzeichnet, dass** es mindestens eine Anordnung (2) von Systemen nach Anspruch 8 umfasst.

## Claims

1. A method for determining an anchor point of a terminal segment of a virtual path for a non-precision FLS approach mode of an aircraft, with a view to landing the aircraft (AC) on a runway (3) of an aerodrome, said terminal segment (5) starting at a final approach fix (FAF) and ending at said anchor point (AP), said method (P) being implemented in an avionics computer (1), in particular a flight management system, comprising at least a processing unit (8) and a navigation database (7), said method (P) comprising at least the following steps:
- a comparing step (E1), implemented by the processing unit (8) of the avionics computer (1), consisting in comparing a first altitude (A1) with what is referred to as a threshold altitude (A3), the first altitude corresponding to the altitude (A1) of a missed approach point (MAP) relative to the runway (3) contained in the navigation database (7) of the avionics computer (1), the threshold altitude (A3) being equal to the sum of a second altitude (A2) corresponding to the altitude of the runway (3) and of a threshold crossing height (TCH); and
- a computing step (E2), also implemented by the processing unit (8) of the avionics computer (1), consisting in determining, depending on this comparison, a terminal point (6) that has an altitude equal to said threshold altitude (A3) and that forms, with the position (P1) of the missed approach point (MAP), a straight line segment (5B, 5C) that has a slope (β) equal to the slope of the straight line segment (5A) defined by the missed approach point (MAP) and the final approach fix (FAF), said terminal point (6) being capable of being used as anchor point (AP),
the method being **characterized in that**, if the comparing step (E1) concludes that the first altitude (A1) is less than said threshold altitude (A3), said terminal point (6) is used as anchor point (AP), in case of absence of a prescribed final end point (FEP) from the navigation database (7).

2. The method as claimed in claim 1,
**characterized in that**, if the comparing step (E1) concludes that the first altitude (A1) is greater than or equal to said threshold altitude (A3), the computing step (E2) uses said terminal point (6) as anchor point (AP).

3. The method as claimed in one of claims 1 and 2,
**characterized in that**, if the comparing step (E1) concludes that the first altitude (A1) is less than said threshold altitude (A3), the computing step (E2) uses as anchor point (AP), in case of presence of a prescribed final end point (FEP) in the navigation database (7), this prescribed final end point (FEP).

4. The method as claimed in one of claims 1 to 3,
**characterized in that** the projection on the ground (S) of the terminal segment (5) is parallel to or aligned with an axis (3A) of the runway (3).

5. The method as claimed in one of claims 1 to 3,
**characterized in that** the projection on the ground (S) of the terminal segment (5) makes to an axis (3A) of the runway (3) a non-zero angle (α) less than or equal to 90°.

6. A procedure for implementing a non-precision FLS approach mode of an aircraft, with a view to landing the aircraft (AC) on a runway (3) of an aerodrome, said procedure (M) using a virtual path (TV) comprising a terminal segment (5) that is defined with respect to an anchor point (AP), said procedure being implemented by a set (2) of avionics systems,
**characterized in that** it comprises at least a method (P) for determining an anchor point (AP) as claimed in any one of claims 1 to 5 and **in that** it uses the anchor point (AP) determined by said method (P) as anchor point of the terminal segment (5) of the virtual path (TV).

7. An avionics computer, in particular a flight management system, for determining an anchor point of a terminal segment of a virtual path for a non-precision FLS approach mode of an aircraft, with a view to landing the aircraft (AC) on a runway (3) of an aerodrome, said terminal segment (5) starting at a final approach fix (FAF) and ending at said anchor point (AP), said avionics computer (1) comprising at least a processing unit (8) and a navigation database (7),
the processing unit (8) being configured:
- to compare a first altitude (A1) with what is referred to as a threshold altitude (A3), the first altitude corresponding to the altitude (A1) of a missed approach point (MAP) relative to the runway (3) contained in the navigation database (7) of the avionics computer (1), the threshold altitude (A3) being equal to the sum of said second altitude (A2) corresponding to the altitude of the runway (3) and of a threshold crossing height (TCH); and
- to determine, depending on this comparison, a terminal point (6) that has an altitude equal to said threshold altitude (A3) and that forms, with the position (P1) of the missed approach point (MAP), a straight line segment (5B, 5C) that has a slope (β) equal to the slope of the straight line segment (5A) defined by the missed approach point (MAP) and the final approach fix (FAF), said terminal point (6) being capable of being used as anchor point (AP), the processing unit being **characterized in that** said terminal point (6) is used as anchor point (AP), in case of absence of a prescribed final end point (FEP) from the navigation database (7), if the comparing step (E1) concludes that the first altitude (A1) is less than said threshold altitude (A3).

8. Set of avionics systems for implementing a non-precision FLS approach mode of an aircraft, with a view to landing the aircraft (AC) on a runway (3) of an aerodrome, said set (2) comprising at least a flight management system configured to use a virtual path (TV) comprising a terminal segment (5) that is defined with respect to an anchor point (AP),
**characterized in that** it comprises at least an avionics computer (1) for determining an anchor point (AP) as claimed in claim 7 and **in that** it is configured to use the anchor point (AP) determined by said avionics computer (1) as anchor point of the terminal segment (5) of the virtual path (TV).

9. Aircraft,
**characterized in that** it comprises at least a set (2) of systems as claimed in claim 8.
